Europäisches Patentamt

(19) European Patent Office

Office européen des brevets

(11) EP 0 837 412 A2

## (12) EUROPEAN PATENT APPLICATION

(43) Date of publication:
22.04.1998 Bulletin 1998/17

(51) Int. Cl.⁶: G06K 7/00

(21) Application number: 97118245.6

(22) Date of filing: 21.10.1997

(84) Designated Contracting States:
AT BE CH DE DK ES FI FR GB GR IE IT LI LU MC NL PT SE
Designated Extension States:
AL LT LV RO SI

(30) Priority: 21.10.1996 US 29132 P

(71) Applicant:
TEXAS INSTRUMENTS DEUTSCHLAND GMBH
85356 Freising (DE)

(72) Inventors:
• Huber, Alexander G.
81735 Munich (DE)
• Aslanidis, Konstantin O.
85221 Dachau (DE)
• Meier, Herbert (nmi)
Moosburg (DE)

(74) Representative:
Schwepfinger, Karl-Heinz, Dipl.-Ing.
Prinz & Partner,
Manzingerweg 7
81241 München (DE)

### (54) Improvements in or relating to RF-ID systems

(57) A data frame structure is disclosed which divides the available pages within a data frame structure into either function pages or physical pages. In this way, by addressing the highest possible function or page on a read operation, causes the transponder to execute this function and to answer with the corresponding physical page, including special information or activities as requested by the function request. If the requested page or function is not available at the specific transponder being interrogated, it will respond depending on the system implementation with the highest available physical address or with the highest available function. In case of a response to a special function request, the transponder responds with the status information bits indicating "special data". The response can then include variable data as well as the normal configuration and permanent data generally received.

FIG. 1
TRANSPONDER OVERVIEW

EP 0 837 412 A2

**Description**

FIELD OF THE INVENTION

This invention generally relates to addressing schemes in radio-frequency identification (RF-ID)s systems.

BACKGROUND OF THE INVENTION

In a standard Radio Frequency-Identification (RF-ID) system, an interrogator transmits an interrogation signal to a transponder within the read range of the interrogator and the transponder responds with a transmission of the transponder identification and/or measurement data and/or user defined data. Both the interrogation signal and the transponder response signals consist of a series of bits of data comprised of the memory of the interrogator and the transponder.

Currently, in applications of radio frequency identification (RF-ID) memory schemes are in use which relate to memory in the transponder in terms of one or more pages or memory blocks. The addressing of these pages or blocks is usually done via reference to a physical address, e.g. for not more than 4K bits of user memory in the transponder, divided into blocks of 64 bits each, 64 blocks or pages need to he addressed. This requires a 6 bit wide field for the address, leaving 2 bit of a byte for other purposes such as commands or status messages. Typically the user information in each block is secured via 16 bits of Block Check Character (BCC) and surrounded by a transmission frame such as start and end bits. Basic functions in communication with a transponder are triggered by the interrogator, transmitting one of the following 4 basic commands: read, program, lock, and read with a password. These four commands can be sent to the transponder with just 2 bits.

In applications wherein transponders with several blocks or pages of information within the memory of each transponder exist, the interrogator not only has to address a particular transponder, but also the corresponding page or block. Another interrogation or transponder response approach is the successive transmission of data blocks or pages, where the interrogator may wait for the corresponding page in the situation of a cyclic or sequential data transmission of several blocks within a continuous data stream from the transponder. When the transponder sends the information back, the transponder adds status information bits and the address of the page sent, to the frame information.

The problem arises in the difficulty the transponder or interrogator has in distinguishing, in addressing the page, between a physical page address and a function request.

Previous proposals and solutions to the problem of distinguishing between a physical page address and a function or special request use fields outside the data area for variable data and do not utilize the differentiation between physical page address and function address to stay within the protocol frame.

SUMMARY OF THE INVENTION

The present invention allows for inclusion of variable data together with or instead of fixed or user defined data within the same protocol frame.

Another goal of this invention is to receive full information about the transponder memory configuration with only one read operation (two read operations maximum if an individual transponder information or number must be read from one page in addition to the information accessed on a different page).

One advantage of this invention is that variable data received from sensors or other periphery can be included in a standard transmission protocol frame.

A second advantage of this invention is that by including the transponder configuration information in the data field of special function pages provides full transponder configuration information and the result of implementation of the highest special function in a single read operation.

Yet another advantage of this invention is that by using the address field for addresses and functions, the overhead in the transmission protocol is reduced.

BRIEF DESCRIPTION OF THE DRAWINGS

The invention will be explained in greater detail with reference to an example of an embodiment of the invention shown in the drawings, in which:

Figure 1 is the frame structure of a transponder response signal showing the distinctions between the different transponders according to a preferred embodiment of the invention.
Figure 2 is the Read/Only transponder frame structure according to a preferred embodiment of the invention.
Figure 3 is the frame structure for the Read/Only + Sensor transponder according to a preferred embodiment of the invention.
Figure 4 is the frame structure for the Multi page Read/Write transponder according to a preferred embodiment of the invention.
Figure 5 is the memory organization structure of a R/W transponder according to a preferred embodiment of the invention.

DETAILED DESCRIPTION OF PREFERRED EMBODIMENTS

As the maximum available physical address range can not always be utilized due to size and cost restriction on the transponder, splitting of the available physical address range into two ranges is proposed, one range being still physical page addresses and the second range representing special function or activity requests such as e.g. executing a measurement and sending back actual results, configuration activities, special signal interfacing, data transfer activities or communication requests. A distinction between physical address and function can be done on a system level, as the interrogator is aware of the different interpretation of both address ranges. It is also possible to address physical pages or blocks directly as well as via a different function address in a special way, still accessing the same physical block or page, but requesting additional special actions.

A preferred embodiment of the invention overcomes the above-mentioned problem by addressing the highest possible function or page on a read operation, which causes the transponder to execute this function and to answer with the corresponding physical page, including special information or activities as requested by the function request. If the requested page or function is not available at the specific transponder being interrogated, it will respond depending on the system implementation with the highest available physical address or with the highest available function. In case of a response to a special function request, the transponder responds with the status information bits indicating "special data". The response can then include variable data as well as the normal configuration and permanent data generally received

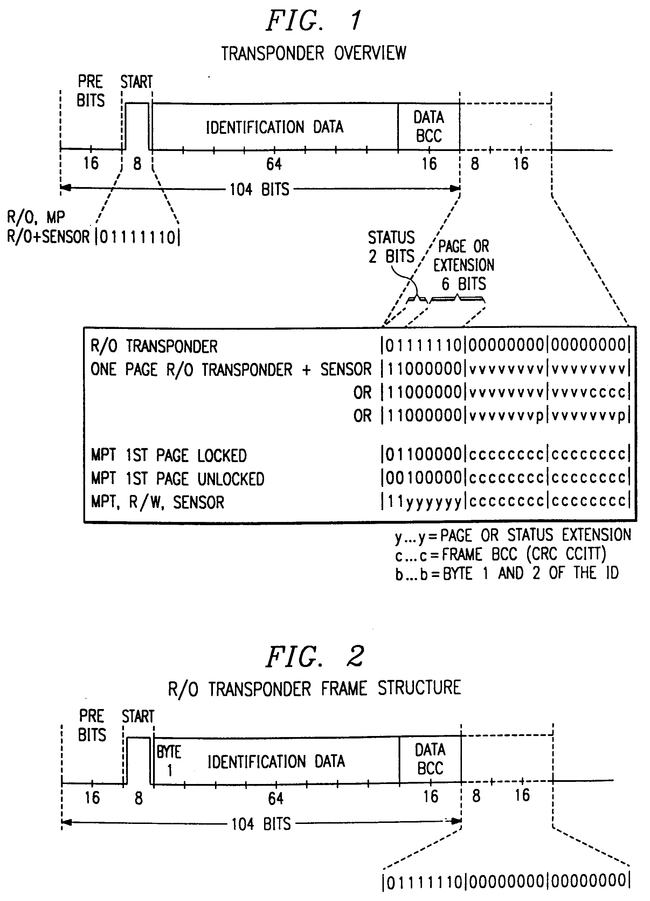

Referring to Figure 1, within the data area of a defined page a certain area can be defined which contains all necessary information about the transponder configuration(i.e. a 16 bit marker field with 1 bit for every special function available). Following the transponder data, comprised of configuration data, permanent data , data BCC, etc., an address byte is used consisting of a 6 bit field providing the number of the highest available physical page or function, and a 2 bit status field defining what has been performed by the transponder. The fixed data, i.e. configuration and permanent data, which are stored in a physical page, are secured by a 16 bit BCC, following after the data field.

The variable data is added to the fixed data stored on that page after the data BCC field. The length of the variable data transmitted together with the fixed data in this page result in a total length equal to the physical page length. The whole information block of e.g. 64 bit is then again protected by a, for example, 16 bit Block Check Character. In other words, if, for example, a physical page is read, 80 bits of fixed data are transmitted within the outer protocol frame (64 bits of identification (ID) data plus a 16 bit Data BCC in addition to e.g. start and stop bits). On the other hand, if a function is addressed, (x) number of fixed data bits plus 16 bit BCC to protect the fixed number allow for $y=(80 - (x + 16))$ bit of variable data; as a maximum 80 bits of variable data (64 + 16) can be transmitted within one block or page. In the transmission frame the full 80 bit are again protected by a 16 bit Block Check Character. In addition an 8 bit status field within the transmission frame carries the information on status (2 bit) and page or function address (6 bit).

The fixed data can e.g. include direct calibration data for a sensor device connected to the transponder or an address in a pre-defined lookup table, as well as information on specific equipment used such as e.g. sensor type(s) available and other system specific fixed data.

If the transponder has no special functions available, it will answer with the highest physical page number available, the distinction between the highest physical page number and the special function is possible due to the address being within the defined range for physical addresses and the status field indicating "special data".

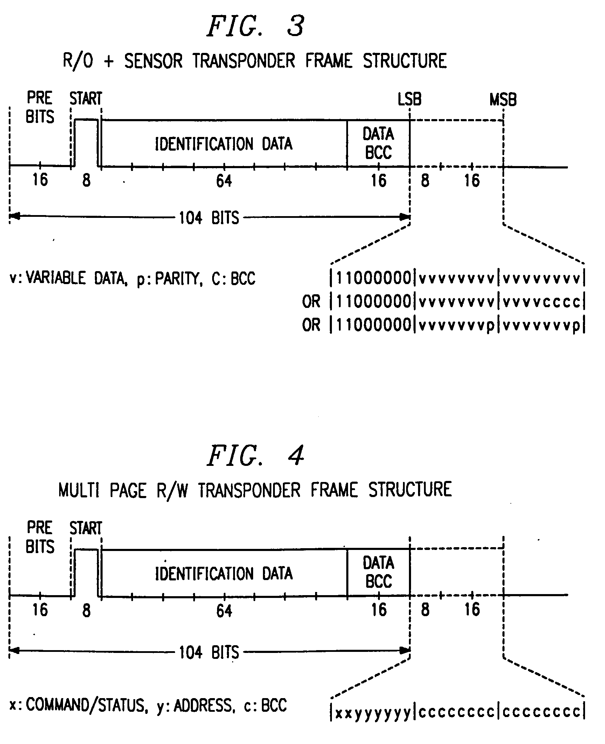

Referring to Figures 2 and 3, in the case of a single page Read/Only (R/O) transponder, only the first page will be sent back. Distinguishing between the multi-page Read/Write (R/W) transponder of Figure 4 and the single page R/O transponder is possible via the different frame protocol, differentiation being possible via different start byte and/or trailing bits.

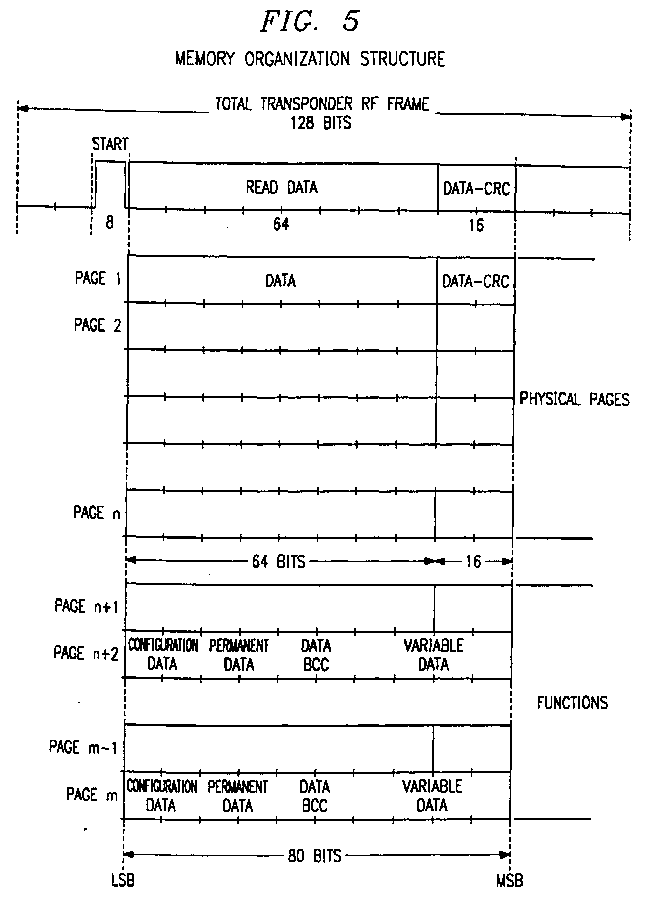

Referring to the generalised transponder of Figure 1, for example, taking a 6 bit address field, having address pages 0 to 63, with page 0 reserved for manufacturer use, could result in the memory organization shown in Figure 5.. The physical address range could start from the bottom or the lowest number bit configuration available in a 6 bit address, where page 0, (000000) is reserved for the manufacturers use, page 1, (000001), is for indicating a read/only transponder (Figure 2), which is compatible to ISO standards, pages 2 to 17 are for indicating physical addresses of the read/write pages and pages 18 to 31 are reserved for physically addressing larger devices.

Alternatively, the function address range could start from the top of the 6 bit address field or from the highest number bit configuration available in a 6 bit format i.e. 111111. In this way, the address of page 63 could command the transponder to perform some function such as a general variable data function such that when a transponder is addressed with the highest possible function on a read operation 63, the transponder executes this function and answers with the information from the corresponding physical page which includes fixed and variable data. If a transponder is addressed with the highest possible function on a read operation and that particular special function is not available to the transponder, then the transponder executes the highest possible available special function and transmits the information, from the corresponding physical page, with the function number of the executed function included in the frame.

Similarly, function address range 62 to 48 could be other predetermined special functions i.e. temperature sensor, etc. and function address range 47 to 34 could be manufacturer defined special functions(which would not necessarily be standardized). The transponder can now be addressed either with a physical page address or with a function request. The manufacturer can assign a function to a physical page address, therefore allowing use of the same memory as a standardized page, if the transponder is accessed with the page address or with the special function implemented in hardware (if addressed with a function request)

Within the data area of a special page, a certain area can be defined which contains all the identification information about the transponder, i.e. a 16 bit marker field with 1 bit for every special function available, a 6 bit field for the number of the highest physical page, and a 2 bit status field for the transmission, for a total of 24 bits or 3 bytes. The fixed data are secured by a 16 bit CRC, following after the data field.

An example of an implementation of a first embodiment of Applicants invention consists in a method of calibrating external sensors of a remote sensing system. The calibration consists of the steps of storing the sensory information within the transponder in calibration points. These calibration points are predetermined ahead of time to identify the sensory information in block form, i.e. one temperature will be given one address and a second temperature will be given a different address etc. Then the next step is transmitting the sensory information back to the interrogator as calibration points associated with a specific sensor. The calibration points are predetermined during assembly of the transponder and stored in the transponder, thereby allowing for use of the sensor/transponder combination on any interrogation device without the need for re-calibration, a central data bank or restriction to only known transponders within a system. Or the calibration points may be manifested as pointers to addresses in a lookup table in the interrogator's memory, where generic calibration points can be stored. The table then needs to be known to each interrogation device.

Also disclosed is a concept for using an RF-ID device as a communication device, where it is possible, given some intelligence or processing capabilities are available on or linked with the transponder, to transfer large amounts of information in blocks of e.g. 80 bits, protected by a Block Check Character. This transfer of data may be transferred from the interrogation device to the transponder and its associated circuitry such as e.g. a micro-processor or additional external memory or from the transponder and its associated circuitry back to the interrogator unit, for example, download from an interrogation unit of a new software to a device connected to a transponder, using the RF-ID system as a communication device for data transfer.

A few preferred embodiments have been described in detail herein above. It is to be understood that the scope of the invention also comprehends embodiments different from those described.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description.

**Claims**

1. A data frame structure comprising at least one page, of a transponder response signal in an RF-ID system, such structure comprising:

   a predetermined number of pages for accessing data in physical addresses
   and the total number of pages less the predetermined number of pages for accessing data at physical addresses for executing functions and accessing data at said physical addresses.

2. A data structure comprising:

   a page or block comprising;
   fixed data, and variable data, wherein said fixed data and said variable data have the same protocol structure.

3. The data structure of Claim 2, wherein said fixed data comprises a unique ID, or configuration data, or calibration data, or user defined fixed data.

4. The data structure of Claim 2 or Claim 3, wherein said variable data comprises changing user data or messages or communication data or sensor data.

5. A method of calibrating external sensors of a remote sensing system comprising the steps of:

   storing the sensory information within the transponder; and
   transmitting said sensory information back as calibration points associated with a specific sensor, wherein said calibration points are predetermined during assembly of said transponder and stored in the transponder, thereby allowing the use of a sensor/transponder combination on any interrogation device without the need for re-calibration, a central data bank or restriction to only known transponders within a system.

6. The method of Claim 5, wherein said calibration points may be manifested as pointers to addresses in a lookup table, such that generic calibration points can be stored, and said look-up table is known to each interrogation device.

7. A method of transferring information in blocks of a predetermined number of bits, protected by a Block Check Character, from an interrogation device to a transponder and its associated circuitry or from a transponder and its associated circuitry to an interrogator device comprising the steps of:

using said interrogator and transponder as a communication device for data transfer.

8. The method according to Claim 7, further comprising providing said associated circuitry of said transponder is a micro-processor or additional external memory.

9. The method according to Claim 7 or Claim 8, further comprising providing a transponder comprising intelligence or processing capabilities.

10. The method of any of Claims 7 to 9, wherein said step of using said interrogator and transponder as a communications device comprises downloading software from an interrogation device to a device connected to a transponder.

11. The method of any of Claims 7 to 10, further comprising transferring information in blocks of 80 bits.

## FIG. 1
### TRANSPONDER OVERVIEW

R/O, MP
R/O+SENSOR |01111110|

STATUS 2 BITS
PAGE OR EXTENSION 6 BITS

| | |
|---|---|
| R/O TRANSPONDER | \|01111110\|00000000\|00000000\| |
| ONE PAGE R/O TRANSPONDER + SENSOR | \|11000000\|vvvvvvvv\|vvvvvvvv\| |
| OR | \|11000000\|vvvvvvvv\|vvvvcccc\| |
| OR | \|11000000\|vvvvvvvp\|vvvvvvvp\| |
| MPT 1ST PAGE LOCKED | \|01100000\|cccccccc\|cccccccc\| |
| MPT 1ST PAGE UNLOCKED | \|00100000\|cccccccc\|cccccccc\| |
| MPT, R/W, SENSOR | \|11yyyyyy\|cccccccc\|cccccccc\| |

y...y = PAGE OR STATUS EXTENSION
c...c = FRAME BCC (CRC CCITT)
b...b = BYTE 1 AND 2 OF THE ID

## FIG. 2
### R/O TRANSPONDER FRAME STRUCTURE

|01111110|00000000|00000000|

## FIG. 3

R/O + SENSOR TRANSPONDER FRAME STRUCTURE

v: VARIABLE DATA, p: PARITY, C: BCC

```
|11000000|vvvvvvvv|vvvvvvvv|
OR |11000000|vvvvvvvv|vvvvcccc|
OR |11000000|vvvvvvvp|vvvvvvvp|
```

## FIG. 4

MULTI PAGE R/W TRANSPONDER FRAME STRUCTURE

x: COMMAND/STATUS, y: ADDRESS, c: BCC

```
|xxyyyyyy|cccccccc|cccccccc|
```

# *FIG. 5*

## MEMORY ORGANIZATION STRUCTURE

TOTAL TRANSPONDER RF FRAME
128 BITS

START

| READ DATA | DATA-CRC |
| 8 | 64 | 16 |

PAGE 1 | DATA | DATA-CRC

PAGE 2

PHYSICAL PAGES

PAGE n

64 BITS — 16

PAGE n+1

PAGE n+2 | CONFIGURATION DATA | PERMANENT DATA | DATA BCC | VARIABLE DATA

FUNCTIONS

PAGE m-1

PAGE m | CONFIGURATION DATA | PERMANENT DATA | DATA BCC | VARIABLE DATA

80 BITS

LSB                                        MSB